# EUROPEAN PATENT SPECIFICATION

(11) **EP 0 792 414 B1**
(45) Date of publication and mention of the grant of the patent: **29.11.2000**
(21) Application number: 95909655.3
(22) Date of filing: 07.02.1995
(51) Int. Cl.: F03D 11/00, F01D 5/16

(54) **WINDMILL BLADE**
WINDRADFLÜGEL
PALE D'EOLIENNE

(30) Priority: 07.02.1994 DK 15894
(43) Date of publication of application: 03.09.1997
(73) Proprietor: LM GLASFIBER A/S, 6640 Lunderskov (DK); BONUS ENERGY A/S, 7330 Brande (DK)
(72) Inventor: STIESDAL, Henrik, DK-5000 Odense C (DK)
(74) Representative: Nielsen, Leif
(86) International application number: DK9500056
(87) International publication number: WO9521327

(56) References cited:
- US-A- 2 292 072
- US-A- 2 349 187
- US-A- 2 999 669
- DERWENT'S ABSTRACT, No. 93-301270/38, Week 9338; & SU,A,1 761 973 (UFA AVIATION INST), 15 September 1992.

## Description

### Background of the invention

The invention relates to a windmill blade of the type disclosed in claim 1, and a method for the reduction of the oscillations in a windmill blade of the kind disclosed in claim 13.

During normal operation, a windmill or turbine blade will be exposed to a large number of forces which are dependent upon parameters such as the construction of the windmill or turbine and the conditions of wind or jetstream, respectively, and movement.

Under certain conditions, in the plane of the blade there will arise oscillations transversely to the length of the blade, so-called transversal oscillations. These transversal oscillations stem among other things from a number of resonances which are primarily transverse resonances. During operation in strong winds or in jetstreams this manifests itself in a particularly complicated oscillation pattern with components not only at right-angles to the blade but also in the plane of the blade. Moreover, the oscillation pattern becomes more complicated due to the fact that the excitation of the resonances varies with both place and time, as is the case for example for a transient excitation. Furthermore, a strong turbulence arises especially at the trailing edge of the blade. Finally, the wave dispersal in the windmill or turbine blade is a combination of several wave types, these being mainly transversal, longitudinal, torsional and flectional waves.

This is a great disadvantage, the reason being that it not only gives rise to a limitation of the utilization of as example a windmill during operation, but also results in a reduction of the lifetime of the windmill and of the blade, in that among other things the blade itself, the windmill hub, the main shaft, the tower and bearings are all more Or less exposed to strong vibrations. The blade will thus be exposed to oscillations which can result in a deterioration of, among other things, the glass fiber structure. This in turn will mean that service has to be carried out on the windmill or the windmill blade, which is both time-consuming and costly. Moreover, the load on the movable mechanical parts will result in considerable wear.

US-2.349.187 describes a vibration dampener comprising a cavity being formed in any suitable part of a turbine blade which is movable about the turbine rotor axis and which in operation is subject to vibration. The cavity is provided by radial bores in which balls or cylindrical rollers are embedded. A damping fluid is contained in the radial bores and the balls or rollers are able to move in the radial bores and in the damping fluid. For optimum damping the balls or rollers are designed to have a natural frequency approximately equal to the blade natural frequency, and the damping fluid has a viscosity enhancing this purpose. Balls or rollers are provided both transversely to the plane of the blade and also in a substantial plane of the blade. However, turbine blades have a very curved configuration, thereby making it difficult to exactly point out what is exactly the plane of the blade.

The vibration dampener described is purely concerned with dampening of turbine blades. Turbine blades are made of metal, are very small compared to windmill blades, and are exposed to totally different forces than windmill blades. The purpose of vibration damping of a turbine blade is primarily to stabilize the rotation of the turbine axis, not reducing the noise level produced by the turbine blade when rotating. The noise level of for example a jet engine is already extremely high and comes from the extremely high velocity of air through the turbine. The rotation of the windmill blades themselves is not the primary source of noise in a turbine. Therefore, damping the vibrations of turbine blades will not add in any significant way to the reduction of the noise level of a turbine. Accordingly, as mentioned, the vibration damping of a turbine blade is primarily for stabilizing the turbine axis when rotating and is not at all for lowering the noise level of the rotating turbine blade.

US-2.292.072 describes another vibration damper for a turbine blade. The vibration damper uses the technique of restricting the flow of fluid through small bores in bodies extending into the turbine blade. Also the flow of fluid is taking place substantially in an assumed plane of the blade and also embodiments are shown for having flow in the longitudinal direction of the turbine blade. As with the turbine blade also mentioned in the former cited prior art it is difficult to say exactly what is the plane of the blade, because the blade itself is very curved.

The vibration damper for the turbine blade mentioned in this prior art has exactly the same purpose and is directed to exactly the same kind of turbine blades as the former cited prior art. It is mentioned that the object of the vibration damper is a damper which will reduce the amplitude of forced resonant vibration and which will prevent self-excited vibration from building up the provision of comparatively large damping forces effected by hydraulic means. The purpose is to stabilize the rotation of the turbine axis, not at all for reducing the noise level from the blade. Both this prior art and the formerly cited art, are from the beginning of the 1940'es, just the decade where great developments took place for jet turbines for aircrafts.

The above-mentioned vibration and oscillation phenomena have for jet turbines been known for many years, but the disadvantages connected with these conditions in connection with windmils have hitherto been limited, the reason being that the windmill blades have hitherto been of relatively small dimensions compared to the rotational speed of the windmill hub. However, the problem has now grown to greater proportions as a consequence of the constantly-increasing dimensions of the windmills. The character of the disadvantages ascertained are no longer only of a dimensional nature, but a physical obstacle to further progress.

### Advantages of the invention

According to the invention, obtaining a reduction of up to 3 dB in the noise level for a windmill by incorporating an oscillation-reduction mechanism in the blade, said mechanism being coupled to the blade or a part of same, and consisting of one or more oscillation-reduction elements which are mutually connected in series or in parallel, and where at least one oscillation-reduction element is made up of at least two of the components resilience, mass and suppression, and where any further oscillation-reduction elements are made up of one or more of the components resilience, mass and suppression, said oscillation-reduction elements having one or more degrees of freedom and preferably moving in a straight line or executing angular displacement around a position of equilibrium, an oscillation-reduction mechanism under ideal conditions with regard to dimensional and excitational states will cancel out the undesired oscillations. The disadvantages with which windmills have been encumbered by these detrimental oscillations are hereby avoided in a surprisingly simple manner.

Completely contrary to turbine blades of as example jet turbines the windmill blade will show vibrations which will have a relatively low frequency and the noise level of which will be relatively low, at least compared to jet turbines. Accordingly, a reduction of the noise level of only 3 dB will have a significant impact on the noise level experienced by the surroundings. Also, because of the frequency being relatively low just a small altering of the vibrations will change the frequency relatively much, thereby significantly increasing the lifetime of the blade. As mentioned before, due to rather small windmills, until now there has been no need for reducing the noise level, nor any need for reducing the frequency, because both the noise level and the frequency of the windmill blades already were very low. However, with larger windmills and accordingly longer windmill blades, the noise level may increase and the frequency may change, and therefore it is now an advantage to decrease the noise level by damping the vibrations.

After measurements on a certain windmill blade or type the blade can in a simple manner be dimensioned for the actual application, all depending on the orientation and size of the undesired oscillation components. There can thus be achieved a great reduction of undesired oscillations regardless of the magnitude and direction of the oscillations.

As disclosed in claim 2, by allowing the kinetic components of at least one of the oscillation-reduction elements to be oriented mainly in the blade's transversal direction, a reduction is achieved in precisely those oscillations which stem from the transversal oscillations in the blade. As a consequence of this reduction, a reduction is achieved in other wave phenomena in the blade. However, it will with advantage also be possible to orient all or some of the damping elements in a direction other than that of the transversal oscillations. Under certain conditions, it can be advantageous to reduce the follow-on oscillations rather than the directly-occurring transversal oscillations, the reason being that under certain conditions these can be easier to locate and herewith to reduce.

As disclosed in claim 3, by configuring the oscillation-reduction mechanism or at least one oscillation-reduction element with a natural frequency which corresponds substantially to or is the same as the dominating natural frequency of the blade, the most effective reduction of the vibrations is achieved, in that the oscillation-reduction mechanism or the individual oscillation-reduction element's counter-oscillation is also frequency dependent, and as such can best be utilized at its maximum value. By a coupling of these oscillation-reduction elements it is advantageous that the respective natural frequencies are adjusted and oriented in relation to the natural frequencies of the blade, so that the total oscillation reduction of the oscillation-reduction mechanism corresponds to but is in opposition to the oscillation pattern demonstrated by the blade. If a strong reduction in oscillation is desired, this will typically best be achieved within the oscillation-reduction element's 3dB bandwidth.

As disclosed in claim 4, by coupling the oscillation-reduction element or the oscillation-reduction elements to the blade in that or those areas of the blade where its greatest vibrations in relation to the non-activated state are generated, a further optimization of the oscillation reduction is achieved, in that the oscillation-reduction element has the greatest possible influence on the blade where the oscillation amplitudes actually arise. An oscillation-reduction element placed at a point of no oscillation will thus have little or no influence on the oscillations in the blade structure.

As disclosed in claim 5, by the incorporation and coupling of at least one of the oscillation-reduction elements to the blade in the vicinity of the blade tip, the most effective oscillation reduction is achieved in relation to the transversal oscillations in the blade, in that these frequently have their maximum components in the blade tip. The oscillation-reduction element or the oscillation-reduction elements will typically be located in the vicinity of the blade tip, but in certain situations it will also be possible to locate the oscillation-reduction element or some of the elements further down towards the blade root. The optimum location of the oscillation-reduction elements will be determined by the blade's oscillation pattern under given or assumed excitations. The oscillation reduction will typically be most effective by locating the oscillation-reduction elements in or in the vicinity of those areas where the blade displays its maximum vibration.

As disclosed in claim 6, by allowing the oscillation-reduction mechanism to consist of a common, suppressed oscillator, a damping of the undesired oscillations is achieved in a simple manner. Among the advantages afforded by the relevant embodiment, it can be mentioned that the parameters involved are temperature independent.

As disclosed in claim 7, by allowing the oscillation-reduction mechanism to consist of a closed container filled with fluid and containing a simple oscillator, a particularly compact embodiment is achieved.

As disclosed in claim 8, by further providing the flow-through path of the oscillation-reduction mechanism with a pressure valve which can preferably be regulated, a partial independence of the viscosity is achieved. The pressure valves will also have the advantage that they can be adjusted so that the acceleration of the mass necessary to move the damper is greater than the gravitational acceleration, and hereby reduce the wear on the system during operation in situations where the system is not subject to oscillations.

As disclosed in claim 9, by allowing the suppression to consist of a pre-stressed friction blanket against the mass, a purely mechanical embodiment is achieved.

As disclosed in claim 10, by providing the flow-through path with an adjustable throttle valve, a dynamic and adjustable damping of the oscillation-reduction element is achieved.

As disclosed in claim 11, by allowing the oscillation-reduction mechanism to consist of just one oscillation-reduction element, where the oscillation-reduction element comprises an aluminium disk to which a mass is connected, said aluminium disk being rotatably mounted on an axle and having a magnet arranged around its edge, so that the magnet, upon movement of the aluminium disk in relation to the magnet, induces eddy currents, a flexible and durable construction is achieved whereby the system's parameters can easily be adjusted without any special demands with regard to the mechanical parts. It will thus be possible, for example, to carry out running adjustments and control the system's parameters with an electrical control circuit. Under certain conditions, it can be an advantage for this circuit to be remotely controlled.

As disclosed in claim 12, by allowing the oscillation-reduction mechanism to consist of just one oscillation-reduction element, where the oscillation-reduction element comprises a closed container filled with fluid, said container being divided into two sections by a perforated dividing wall, where the mass consists of fluid, where a possible resilience consists of a resilient gas, and where the damper consists of the velocity-dependent resistance directed against the movement which stems from the movement of the fluid through the perforated dividing wall, an effective reduction is achieved of the undesired oscillations in the blade. Further advantages of this embodiment are that the oscillation-reduction mechanism, by the selection of a suitable fluid for same, will not suffer from ageing and hysteris phenomena, which in turn results in a blade which does not place great demands with regard to maintenance.

As disclosed in claim 13, by orienting the oscillation-reduction element or elements in the oscillation direction or oscillation directions of the undesired oscillation(s), and by tuning the resonant frequency of the individual oscillation-reduction element(s) more or less to the frequency of the undesired oscillation(s), a reduction in the undesired oscillations in the blade is achieved in a simple and effective manner. This method thus makes it possible, with subsequent mounting on known blades, to achieve all of the advantages of the invention.

As disclosed in claim 14, by orienting the oscillation-reduction elements mainly in the blade's transversal direction, a particularly effective reduction is achieved in the blade's transversal oscillations.

As disclosed in claim 15, by placing the oscillation-reduction element or elements mainly in those places in the blade structure which have the greatest vibration(s) in relation to the blade's non-activated state, a particularly effective reduction in the undesired oscillations is achieved, the reason being that the oscillation-reduction means have greatest effect on the blade where this has its greatest vibrations.

### The drawing

In the following section, some example embodiments according to the invention will be described in more detail with reference to the drawing, where
- fig. 1: shows an example of a principle configuration of an oscillation-reduction element, with the basic elements mass, damper and resilience built into a windmill blade,
- figs. 2-6: show examples of embodiments of an oscillation reduction element according to the invention, and
- fig. 7: shows a preferred embodiment of the oscillation-reduction mechanism consisting of one oscillation-reduction element.

### Description of the example embodiments

Any oscillation system in a structure can in principle be configured or simulated as a combination of three elements; a resilience 2, a damper 3 and a mass 4.

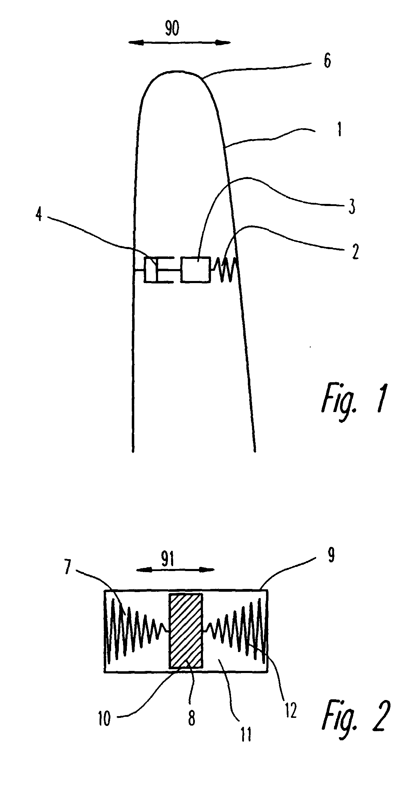

In fig. 1 is shown how the direction of movement of the transversal oscillations in a windmill blade 1 are oriented, in that these are indicated by the arrow 90. In fig. 1, the three elements are coupled together to form an oscillation-reduction element according to the invention. This consists of a damper 4, a resilience 2 and a mass 3, which in the given example are coupled to the blade 1 as a simple, suppressed oscillator with a degree of freedom.

In fig. 2 is shown an example embodiment according to the invention, where the oscillation-reduction element consists of a swinging mass 8, which is integrated in a damper housing, which in turn consists of a closed container 9 containing a viscous medium 11. The mass is placed between two springs 7 and 12 which are arranged in the direction of movement 91 of the mass 8. The mass 8, which thus separates the container into two sections, is provided with- a fluid path 10 through which fluid can flow. The shown and the following oscillation-reduction elements can thus be mounted firmly in a blade as an oscillation-reduction mechanism or as a part of an oscillation-reduction mechanism according to the invention. The orientation of the oscillation-reduction element will thus depend on which oscillations the oscillation-reduction element is intended to counteract.

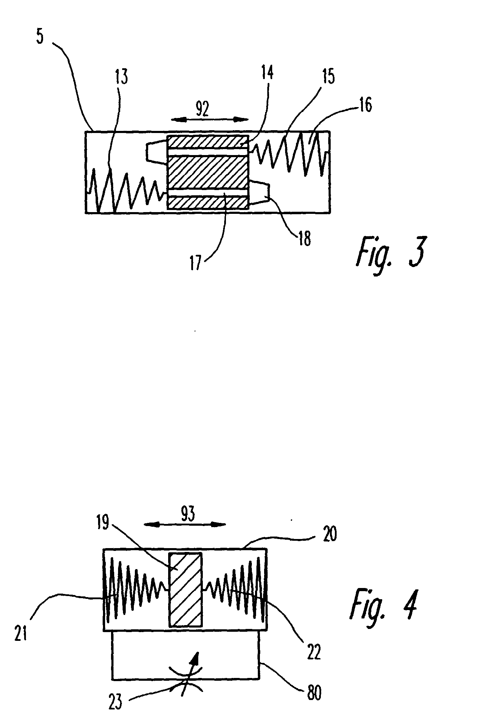

In fig. 3 is seen a further example embodiment of an oscillation-reduction element which in principle is configured in the same manner as the example described above. A mass 14, with fluid paths 17 which connect the sections divided by the mass 14, is built into a damper housing 5 which contains fluid 16. The mass 14 is connected to the damper housing 5 by two springs 13 and 15, and the fluid paths 17 are provided with a pressure valve 18, which provides the advantage that they can be adjusted so that the necessary acceleration of the mass in the direction of movement 92, which is required in order to activate the oscillation-reduction element, is greater than the gravitational acceleration. This reduces wear on the oscillation-reduction element during operation in situations where the blade is not excited.

In fig. 4 is shown another oscillation-reduction element which is made up of a mass 19 which is built into a damper housing 20 containing fluid. The mass 19, which divides the inside of the damper housing 20 into two sections, is connected to the damper housing in each section by two springs 21 and 22. The two sections are mutually connected by a fluid path 80. By inserting a throttle valve 23 in the fluid path 80 which connects the two sections of the damper housing 20, an adjustable damping of the fluid flow is achieved when the mass is excited in the direction 93.

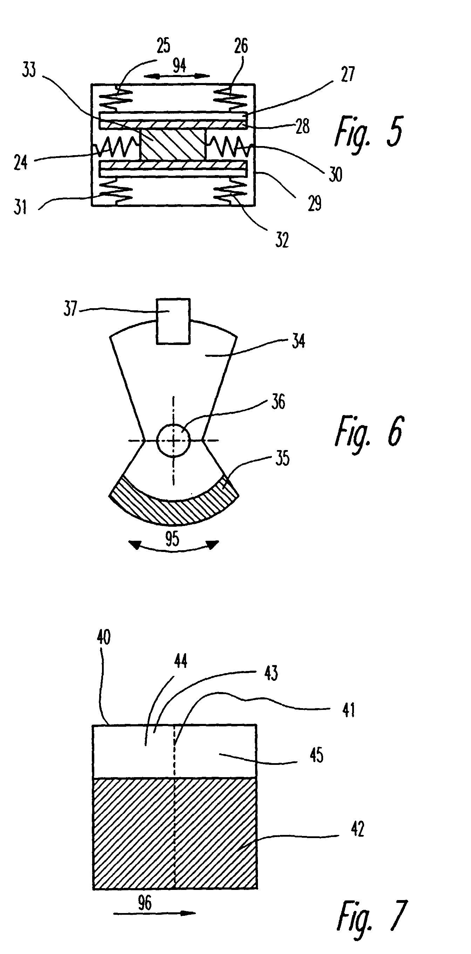

In fig. 5 is shown a purely mechanical embodiment of an oscillation-reduction element, where a mass 33 is held in a movement path in the direction 94 by two plates 27 with friction mats 28, said friction mats being pre-stressed by means of springs 25, 26, 31 and 32. The whole system is placed in a housing 29. The damping of the oscillations in the direction of the arrow will thus depend of the elasticity constant of the springs 25, 26, 31 and 32 and on the friction characteristic of the felt mats 28.

Fig. 6 shows an electromagnetic version of an oscillation-reduction element. This element, which executes angular oscillations in the direction 95 during a given excitation, consists of an aluminium disk 34 with a mass 35. This disk is suspended on an axle 36, and during movement of the system a pole shoe with strong magnet 37 will induce eddy currents in the aluminium disk 34, and will thus produce a resistance to movement.

Fig. 7 shows a preferred embodiment according to the invention, where the oscillation-reduction mechanism consists of a single oscillation-reduction element which in turn consists of a closed container 40. This container 40 is divided into two chambers 44, 45 by a perforated plate 41 through which, all depending on the degree of perforation and the friction which arises at the individual holes in the plate, fluid 42 can flow from the one chamber to the other. The container 40 also contains a gas 43, for example air. During acceleration in the direction 96, the fluid will flow through the perforation in towards the chamber 44, all depending on the amount of acceleration and the degree of perforation. The friction stemming from the perforated dividing wall 41, which serves as a number of restrictions, will act against the movement of the fluid. Furthermore, the gas 43 acts as a resilience which partly counteracts the movement of the fluid and partly stores the movement energy.

Under certain conditions, however, it can be an advantage to omit the gas 43, so that the oscillation system consists solely of the basic elements, i.e. mass and damper.

With this embodiment, the oscillation-reduction mechanism consists of one oscillation-reduction element, as described above, which is placed in the vicinity of the tip 6 of the windmill blade, where the natural frequency of the oscillation-reduction element corresponds to or is +/- 10% of the natural frequency of the blade. This provides a maximum utilization of the oscillation-reduction mechanism.

According to the invention, all of the examples of oscillation-reduction elements mentioned can be coupled both mutually and to the blade to form an oscillation-reduction mechanism whereby the oscillation-reduction elements together produce the desired magnitudes and orientations of oscillation reduction.

## Claims

1. Windmill blade (1) with means for oscillation reduction, and in which blade (1) there is built an oscillation-reduction mechanism which is coupled to the blade or a part thereof, consisting of one or more oscillation-reduction elements which are mutually coupled in series or in parallel, where at least one oscillation-reduction element consists of at least two of the components resilience (2), mass (3) and damper (4), where the resilience (2) represents a complex, alternatively a simplex magnitude of the system's elasticity constant, the mass (3) represents an ideal or non-ideal oscillation mass, and the damper (4) represents a substantially velocity-proportional resistance against movement which, however, may well be complex, and where further oscillation-reduction elements comprise one or more of the components resilience (2), mass (3) and damper (4), said oscillation-reduction elements having one or more degrees of freedom and moving in the plane of the blade mainly in a rectilinear manner, alternatively executing angular turning movements around a position of equilibrium, whereby the oscillation-reduction mechanism has a natural frequency adjusted within the 3 dB bandwidth of the mechanism.

2. Windmill blade according to claim 1, **characterized** in that at least one of the kinetic components (2, 3, 4) of the oscillation-reduction elements is oriented mainly in the transversal direction (90) of the blade.

3. Windmill blade according to claim 1 or 2, **characterized** in that the natural frequency of the oscillation-reduction mechanism or at least one of the oscillation-reduction elements (2, 3, 4) corresponds substantially to or is the same as the dominating natural frequency of the blade (1)

4. Windmill blade according to any of the foregoing claims 1 to 3, **characterized** in that the oscillation-reduction element or oscillation-reduction elements (2, 3, 4) are coupled to the blade (1) in that or those areas of the blade where the greatest vibration occurs in relation to the non-activated state.

5. Windmill blade according to any of the foregoing claims, **characterized** in that at least one of the oscillation-reduction elements (2, 3, 4) is built into and coupled to the blade in the vicinity of the blade tip (6).

6. Windmill blade according to any of the foregoing claims, **characterized** in that the oscillation-reduction mechanism consists of just one oscillation-reduction element, where the oscillation-reduction element comprises a suppressed, simple oscillator with a degree of freedom, consisting of a mass (3) which is coupled to the windmill blade via a spring (2) and a viscous damper (4).

7. Windmill blade according to any of the foregoing claims 1 to 5, **characterized** in that the oscillation-reduction mechanism consists of just one oscillation-reduction element, where the oscillation-reduction element a closed container (9) filled with fluid in which a mass (8) with a direction of movement (91), which divides the container (9) into two sections, is suspended between two springs (7,12) which constitute the system's resilience, said springs (7,12) being oriented in the direction of movement (91) of the mass, said mass (8) containing or defining a flow-through path (10) through which fluid (11) can flow, said flow-through path (10) during the through-flow of fluid constituting a damper which is the system's movement-dependent resistance.

8. Windmill blade according to claim 7 **characterized** in that the flow-through path (17) is provided with a pressure valve (18) which is preferably adjustable.

9. Windmill blade according to any of the foregoing claims 1 to 5 **characterized** in that the oscillation-reduction mechanism consists of just one oscillation-reduction element, where the oscillation-reduction element comprises a closed container (20) filled with fluid in which a mass (19) with a direction of movement (93) divides the container (20) into two sections and is suspended between two springs (21,22) which constitute the system's resilience, said springs (21,22) being oriented in the direction of movement (93) of the mass, where the two sections of the container (20) are connected by a flow-through path (80), said flow-through path (80) being provided with an adjustable throttle valve (23) through which fluid can flow, and where said flow-through path (80) during the through-flow of fluid constitutes a differentiated damper which is the system's movement-dependent resistance.

10. Windmill blade according to any of the foregoing claims 1 to 5, **characterized** in that the oscillation-reduction mechanism consists of just one oscillation-reduction element, where the oscillation-reduction element comprises a mass (19) which is suspended between two springs (21,22), and where the damping of the system is effected by one or preferably two friction mats (28, 29) which in the main are pre-stressed at right-angles towards the mass (33) by the springs (25, 26, 31, 32).

11. Windmill blade according to any of the foregoing claims 1 to 5, **characterized** in that the oscillation-reduction mechanism consists of just one oscillation-reduction element, where the oscillation-reduction element comprises an aluminium disk (34) to which-there is connected a mass (35), said aluminium disk (34) being rotatably mounted on an axle (36) and having a magnet (37) arranged around its edge, so that the magnet (37), upon movement of the aluminium disk (34) in relation to the magnet (37) in the direction (95), induces eddy currents, and herewith constitutes the system's movement-dependent resistance.

12. Windmill blade according to any of the foregoing claims 1 to 5, **characterized** in that the oscillation-reduction mechanism consists of just one oscillation-reduction element, where the oscillation-reduction element comprises a closed container (40) filled with fluid, said container being divided into two sections (44, 45) by a perforated dividing wall (41), where the swinging mass consists of a fluid (42), where a possible resilience consists of a resilient gas (43), and where the damper comprises the velocity-dependent resistance directed against the movement which arises from the movement of the fluid (42) through the perforated dividing wall (41).

13. Method for the reduction of one or more undesired oscillations in combination with a windmill blade according to claims 1-12, and where the oscillation-reduction element or elements are oriented mainly in the oscillation direction or directions of the undesired oscillation(s), and in that the resonant frequency or frequencies of the individual oscillation-reduction element or elements are tuned mainly to the frequency of the undesired oscillation or oscillations, whereby the reduction in noise level between a blade with undesired oscillations and a blade provided with the oscillation-reduction element is 3 dB or less.

14. Method according to claim 13, **characterized** in that the oscillation-reduction elements are preferably placed in the transverse direction to the length of the blade.

15. Method according to claims 13 or 14, **characterized** in that the oscillation-reduction element or elements are placed at those points in the blade structure which have the greatest vibration(s) in relation to the non-activated state of the blade.

## Patentansprüche

1. Windradflügel (1) mit einem Mittel zur Verringerung von Oszillationen, und in welchen Flügel (1) ein Oszillationsverringerungsmechanismus eingebaut ist, welcher an den Flügel oder einen Teil desselben gekoppelt ist, und aus einem oder mehreren Oszillationsverringerungselementen besteht, die seriell oder parallel miteinander gekoppelt sind, wobei mindestens ein Oszillationsverringerungselement aus mindestens zwei der Komponenten Federung (2), Masse (3) und Dämpfer (4) besteht, wobei die Federung (2) eine Komplex-, alternativ dazu eine Simplexgröße der Elastizitätskonstante des Systems bildet, die Masse (3) eine ideale oder nicht ideale Schwingungsmasse bildet und der Dämpfer (4) einen im wesentlichen der Geschwindigkeit proportionalen Bewegungswiderstand bildet, der jedoch auch komplex sein kann, und wobei weitere Oszillationsverringerungselemente eine oder mehrere der Komponenten Federung (2), Masse (3) und Dämpfer (4) aufweisen, wobei die Oszillationsverringerungselemente einen oder mehrere Freiheitsgrade aufweisen und sich in der Ebene des Flügels hauptsächlich geradlinig bewegen, alternativ dazu Winkeldrehbewegungen um eine Gleichgewichtsposition ausführen, wobei der Oszillationsverringerungsmechanismus eine Eigenfrequenz aufweist, die so eingestellt ist, daß sie innerhalb der 3 dB Bandbreite des Flügels liegt.

2. Windradflügel nach Anspruch 1, dadurch gekennzeichnet, daß mindestens eine der kinetischen Komponenten (2, 3, 4) der Oszillationsverringerungslemente hauptsächlich in der Transversalrichtung (90) des Flügels ausgerichtet ist.

3. Windradflügel nach Anspruch 1 oder 2, dadurch gekennzeichnet, daß die Eigenfrequenz des Oszillationsverringerungsmechanismus oder mindestens eines der Oszillationsverringerungselemente (2, 3, 4) im wesentlichen der Haupteigenfrequenz des Flügels (1) entspricht oder gleich dieser ist.

4. Windradflügel nach einem der vorstehenden Ansprüche 1 bis 3, dadurch gekennzeichnet, daß das Oszillationsverringerungselement oder die Oscillationsverringerungselemente (2, 3, 4) mit dem Flügel (1) in dem oder den Bereich(en) des Flügels gekoppelt ist (sind), wo die größte Vibration in bezug auf den nicht aktivierten Zustand auftritt.

5. Windradflügel nach einem der vorstehenden Ansprüche, dadurch gekennzeichnet, daß mindestens eines der Oszillationsverringerungselemente (2, 3, 4) in der Nähe der Flügelspitze (6) in den Flügel eingebaut und an diesen gekoppelt ist.

6. Windradflügel nach einem der vorstehenden Ansprüche 2, dadurch gekennzeichnet, daß der Oszillationsverringerungsmechanismus aus genau einem Oszillationsverringerungselement besteht, wobei das Oszillationsverringerungselement einen entstörten, einfachen Oszillator mit einem Freiheitsgrad aufweist, der aus einer Masse (3) besteht, welche über eine Feder (2) und einen viskosen Dämpfer (4) an den Windradflügel gekoppelt ist.

7. Windradflügel nach einem der vorstehenden Ansprüche 1 bis 5, dadurch gekennzeichnet, daß der Oszillationsverringerungsmechanismus aus genau einem Oszillationsverringerungselement besteht, wobei das Oszillationsverringerungselement ein geschlossener Behälter (9) ist, der mit einem Fluid gefüllt ist, in dem eine Masse (8) mit einer Bewegungsrichtung (91), die den Behälter (9) in zwei Sektionen teilt, zwischen zwei die Federung des Systems bildenden Federn (7, 12) aufgehängt ist, wobei die Federn (7, 12) in der Bewegungsrichtung (91) der Masse ausgerichtet sind, wobei die Masse (8) einen Durchflußweg (10) enthält oder begrenzt, durch den Fluid (11) fließen kann, wobei der Durchflußweg (10) während des Durchflußes von Fluid einen Dämpfer bildet, der der bewegungsabhängige Widerstand des Systems ist.

8. Windradflügel nach Anspruch 7, dadurch gekennzeichnet, daß der Durchflußweg (17) mit einem Druckventil (18) ausgestattet ist, welches vorzugsweise einstellbar ist.

9. Windradflügel nach einem der vorstehenden Ansprüche 1 bis 5, dadurch gekennzeichnet, daß der Oszillationsverringerungsmechanismus aus genau einem Oszillationsverringerungselement besteht, wobei das Oszillationsverringerungselement einen geschlossenen Behälter (20) aufweist, der mit einem Fluid gefüllt ist, in dem eine Masse (19) mit einer Bewegungsrichtung (93) den Behälter (20) in zwei Sektionen teilt und zwischen zwei die Federung des Systems bildenden Federn (21, 22) aufgehängt ist, wobei die Federn (21, 22) in der Bewegungsrichtung (93) der Masse ausgerichtet sind, wobei die beiden Sektionen des Behälters (20) durch einen Durchflußweg (80) verbunden sind, wobei der Durchflußweg (80) mit einem einstellbaren Drosselventil (23) ausgestattet ist, durch das das Fluid fließen kann, und wobei der Durchflußweg (80) während des Durchflusses von Fluid einen differenzierten Dämpfer bildet, der der bewegungsabhängige Widerstand des Systems ist.

10. Windradflügel nach einem der vorstehenden Ansprüche 1 bis 5, dadurch gekennzeichnet, daß der Oszillationsverringerungsmechanismus aus genau einem Oszillationsverringerungselement besteht, wobei das Oszillationsverringerungselement eine Masse (19) aufweist, die zwischen Federn (21, 22) aufgehängt ist, und wobei die Dämpfung des Systems durch eine oder, vorzugsweise, zwei Reibungsmatte(n) (28, 29) bewirkt wird, die durch die Federn (25, 26, 31, 32) hauptsächlich rechtwinkelig gegen die Masse (33) vorbelastet sind.

11. Windradflügel nach einem der vorstehenden Ansprüche 1 bis 5, dadurch gekennzeichnet, daß der Oszillationsverringerungsmechanismus aus genau einem Oszillationsverringerungselement besteht, wobei das Oszillationsverringerungselement eine Aluminiumscheibe (34) aufweist, mit der eine Masse (35) verbunden ist, wobei die Aluminiumscheibe (34) drehbar auf einer Achse (36) gelagen ist und einen Magneten (37) aufweist, der um ihre Kante herum angeordnet ist, so daß der Magnet (37) bei Bewegung der Aluminiumscheibe (34) in bezug auf den Magneten (37) in die Richtung (95) Wirbelströme induziert und dadurch den bewegungsabhängigen Wiederstand des Systems bildet.

12. Windradflügel nach einem der vorstehenden Ansprüche 1 bis 5, dadurch gekennzeichnet, daß der Oszillationsverringerungsmechanismus aus genau einem Oszillationsverringerungselement besteht, wobei das Oszillationsverringerungselement einen geschlossenen Behälter (40) aufweist, der mit einem Fluid gefüllt ist und durch eine perforierte Teilungswand (41) in zwei Sektionen (44, 45) aufgeteilt ist, wobei die schwingende Masse aus einem Fluid (42) besteht, wobei eine mögliche Federung aus einem federnden Gas (43) besteht und wobei der Dämpfer den gegen die Bewegung gerichteten, geschwindigkeitsabhängigen Widerstand aufweist, der aus der Bewegung des Fluids (42) durch die perforierte Teilungswand (41) entsteht.

13. Verfahren zur Verringerung einer oder mehrerer unerwünschter Oszillation(en) in Kombination mit einem Windradflügel nach den Ansprüchen 1 bis 12, und wobei das Oszillationsverringerungselement oder die -elemente hauptsächlich in der Oszillationsrichtung oder -richtungen der unerwünschten Oszillation(en) ausgerichtet ist (sind), und daß die Resonanzfrequenz(en) des (der) individuellen Oszillationsverringerungselemente(s) hauptsächlich auf die Frequenz der unerwünschten Schwingung(en) abgestimmt ist (sind), wobei die Verringerung des Geräuschpegels zwischen einem Flügel mit unerwünschten Oszillationen und einem mit dem Oszillationsverringerungselement ausgestatteten Blatt 3 dB oder weniger beträgt.

14. Verfahren nach Anspruch 13, dadurch gekennzeichnet, daß die Oszillationsverringerungselemente vorzugsweise in der Transversalrichtung zur Länge des Flügels angeordnet sind.

15. Verfahren nach Anspruch 13 oder 14, dadurch gekennzeichnet, daß das oder die Oszillationsverringerungselement(e) an jenen Punkten in der Flügelstruktur angebracht ist (sind), welche die größten Vibration(en) in bezug auf den nicht aktivierten Zustand des Flügels aufweisen.

## Revendications

1. Pale d'éolienne (1) comprenant des moyens de réduction d'oscillation, et dans laquelle pale (1) un mécanisme de réduction d'oscillation est incorporé, lequel mécanisme étant accouplé à la pale ou à une partie de celle-ci, comportant un ou plusieurs élément(s) de réduction d'oscillation, qui sont reliés l'un à l'autre en série ou en parallèle, dont au moins un élément de réduction d'oscillation comprenant au moins deux des composantes résilience (2), masse (3), et amortisseur (4), la résilience (2) représentant une grandeur complexe, alternativement simplexe, du constant élasticité du système, la masse (3) représentant une masse d'oscillation idéale ou non-idéale, et l'amortisseur (4) représentant une résistance substantiellement proportionelle à la vitesse contre les mouvements qui cependant peuvent être complexes, et d'autres éléments de réduction d'oscillation comprenant une ou plusieurs des composantes résilience (2), masse (3), et amortisseur (4), lesdits éléments de réduction d'oscillation ayant un ou plusieurs degrés de liberté et se mouvant sur le plan de la pale, essentiellement dans une manière rectiligne, alternativement en exécutant des mouvements angulaires pivotants autour d'une position d'équilibre, en ce que le mécanisme de réduction d'oscillation possède une fréquence naturelle ajustée à la largeur de bande à 3 dB du mécanisme.

2. Pale d'éolienne selon la revendication 1, **caractérisée** en ce qu'au moins une des composantes cinétiques (2, 3, 4) des éléments de réduction d'oscillation est dirigée surtout dans la direction transversale (90) de la pale.

3. Pale d'éolienne selon la revendication 1 ou 2, **caractérisée** en ce que la fréquence naturelle du mécanisme de réduction d'oscillation ou au moins un des éléments de réduction d'oscillation (2, 3, 4) correspond substantiellement à la fréquence naturelle dominante de la pale (1) ou est la même de celle-ci.

4. Pale d'éolienne selon une des revendications précédentes 1 à 3, **caractérisée** en ce que le ou les élément(s) de réduction d'oscillation (2, 3, 4) est/sont accouplé(s) à la pale (1) dans le ou les endroit(s) de la pale où la vibration la plus grande apparaîtra par rapport à l'état non-activé.

5. Pale d'éolienne selon une des revendications précedentes, **caractérisée** en ce qu'au moins un des éléments de réduction d'oscillation (2, 3, 4) est incorporé dans et accouplé à la pale aux alentours du bout de la pale (6).

6. Pale d'éolienne selon une des revendications précedentes, **caractérisée** en ce que le mécanisme de réduction d'oscillation comprend seulement un élément de réduction d'oscillation, l'élément de réduction d'oscillation comprenant un oscillateur simple et supprimé avec un degré de liberté, comprenant une masse (3) qui est accouplée à la pale d'éolienne par un ressort (2) et un amortisseur visqueux (4).

7. Pale d'éolienne selon une des revendications précédentes 1 à 5, **caractérisée** en ce que le mécanisme de réduction d'oscillation comprend seulement un élément de réduction d'oscillation, l'élément de réduction d'oscillation étant un réservoir fermé (9) rempli d'un liquide, dans lequel une masse (8) avec une direction de mouvement (91) qui divise le réservoir (9) en deux sections est suspendue entre deux ressorts (7, 12) qui constituent la résilience du système, lesdits ressorts (7, 12) étant dirigés dans la direction du mouvement (91) de la masse, ladite masse (8) comportant ou définissant une voie d'écoulement (10) à travers laquelle le liquide (11) peut écouler, ladite voie d'écoulement (10) constituant un amortisseur lors de l'écoulement du liquide, lequel amortisseur est la résistance dépendant du mouvement du système.

8. Pale d'éolienne selon la revendication 7, **caractérisée** en ce que la voie d' écoulement (17) est prévue d'une valve de pression (18) de préférence ajustable.

9. Pale d'éolienne selon une des revendications précédentes 1 à 5, **caractérisée** en ce que le mécanisme de réduction d'oscillation comprend seulement un élément de réduction d'oscillation, l'élément de réduction d'oscillation comprenant un réservoir fermé (20) rempli d'un liquide, dans lequel une masse (19) avec une direction de mouvement (93) divise le réservoir (20) en deux sections et est suspendue entre deux ressorts (21, 22) qui constituent la résilience du système, lesdits ressorts (21, 22) étant dirigés dans la direction de mouvement (93) de la masse, les deux sections du réservoir (20) étant reliées par une voie d'écoulement (80), ladite voie d'écoulement (80) étant prévue d'une valve à papillon (23) à travers laquelle le liquide peut écouler, et ladite voie d'écoulement (80) lors de l'écoulement du liquide constituant un amortisseur différentié qui est la résistance dépendant du mouvement du système.

10. Pale d'éolienne selon une des revendications précedentes 1 à 5, **caractérisée** en ce que le mécanisme de réduction d'oscillation comprend seulement un élément de réduction d'oscillation, l'élément de réduction d'oscillation comprenant une masse (19) suspendue entre deux ressorts (21, 22) et le système d'amortissement étant effectué par un ou de préférence par deux mats de friction (28, 29) qui substantiellement sont préchargé par les ressorts (25, 26, 31, 32) à angles droit sur la masse (33).

11. Pale d'éolienne selon une des revendications précedentes 1 à 5, **caractérisée** en ce que le mécanisme de réduction d'oscillation comprend seulement un élément de réduction d'oscillation, l'élément de réduction d'oscillation comprenant un disque en aluminium (34) auquel est liée une masse (35), ledit disque en aluminium (34) étant monté en rotation sur un axe (36) et ayant un aimant (37) situé autour de son bord, de sorte que l'aimant (37) lors d'un mouvement du disque en aluminium (34) par rapport à l'aimant (37) dans la direction (95) introduit des courants tourbillonnaires et par conséquant constitue la résistance dépendant du mouvement du système.

12. Pale d'éolienne selon une des revendications précédentes 1 à 5, **caractérisée** en ce que le mécanisme de réduction d'oscillation comprend seulement un élément de réduction d'oscillation, l'élément de réduction d'oscillation comprenant un réservoir fermé (40) rempli d'un liquide, ledit réservoir étant divisé en deux sections (44, 45) par une paroi perforée (41), la masse oscillante se composant d'un liquide (42), une résilience possible se composant d'un gaz résiliant (43), et l'amortisseur comprenant la résistance substantiellement proportionelle à la vitesse dirigée contre le mouvement qui dérive du mouvement du liquide (42) à travers la paroi perforée (41).

13. Procédé de réduction d'une ou de plusieurs oscillations indésirables en combinaison avec une pale d'éolienne selon les revendications 1 à 12, et le ou les élément(s) de réduction d'oscillation étant orienté(s) substantiellement dans la ou les direction(s) de l'oscillation de la/des oscillation(s) indésirable(s) et en ce que la ou les fréquence(s) résonante(s) du ou des élément(s) de réduction d'oscillation individuel(s) est/sont accordée(s) substantiellement à la fréquence de l'oscillation ou des oscillations indésirable(s), en ce que la réduction du dégré de bruit entre une pale avec des oscillations indésirables et une pale prévue de l'élément de réduction d'oscillation est de 3 dB ou moins.

14. Procédé selon la revendication 13, **caractérisée** en que les éléments de réduction d'oscillation de préférence sont placés dans la direction transversale à la longueur de la pale.

15. Procédé selon les revendications 13 ou 14, **caractérisée** en ce que le ou les élément(s) de réduction d'oscillation est/sont placé(s) à des endroits dans la structure de la pale qui ont la ou les vibration(s) la/les plus grande(s) par rapport à l'état non-activé de la pale.
